# EUROPÄISCHE PATENTSCHRIFT

(11) **EP 1 577 571 B1**
(45) Veröffentlichungstag und Bekanntmachung des Hinweises auf die Patenterteilung: **27.09.2006**
(21) Anmeldenummer: 04029420.9
(22) Anmeldetag: 13.12.2004
(51) Int. Cl.: F16B 39/26

(54) **Befestigungselement, Unterlegscheibe sowie Befestigungsmittel hieraus**
Fastening element, washer as well means for mounting
Elément d'attache, rondelle et aussi bien un dispositif de fixation

(30) Priorität: 17.03.2004 DE 102004013372
(43) Veröffentlichungstag der Anmeldung: 21.09.2005
(73) Patentinhaber: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Lewandowsky, Klaus

(56) Entgegenhaltungen:
- GB-A- 272 807
- GB-A- 190 101 315
- US-A- 3 304 562

## Beschreibung

Die vorliegende Erfindung betrifft ein Befestigungsmittel umfassend ein Befestigungselement und eine Unterlegscheibe, wobei das Befestigungselement an einem Ende eine Auflagefläche für die am Befestigungselement drehbar und unverlierbar gehaltene Unterlegscheibe (14) und eine umlaufende Hinterschneidung aufweist und wobei die Unterlegscheibe eine mit der Auflagefläche kooperierende Kontaktfläche aufweist, auf der mindestens zwei sich axial in den Bereich der Hinterschneidung erstreckende Haltelappen ausgebildet sind.

Eine gattungsgemäße Unterlegscheibe ist aus der EP 1 091 135 A2 bekannt. Diese Unterlegscheibe weist einen Scheibenkörper mit mindestens zwei angeformten Haltekrallen auf, die um einen am Befestigungselement vorgesehenen umlaufenden Flansch umlegbar sind. Auf diese Weise wird die Unterlegscheibe am Befestigungselement unverlierbar gehalten. Das deutsche Gebrauchsmuster DE 94 00 671 U1 beschreibt eine Unterlegscheibe, die statt Haltekrallen einen um die Scheibenkörper umlaufenden Ringsteg aufweist.

Bei den bekannten Ausführungsformen von Mutternkörpern mit umlaufendem Flansch zum Halten der Unterlegscheibe ist die radiale Ausdehnung der Unterlegscheibe begrenzt. Der Außendurchmesser der Unterlegscheibe kann nicht wesentlich größer sein als der Durchmesser des umlaufenden Flansches. Andernfalls müsste zur Herstellung der Haltekrallen Einschnitte an der Unterlegscheibe vorgenommen werden, was einerseits fertigungstechnisch aufwendig ist und andererseits zur Instabilität der Unterlegscheibe führt. Außerdem ist auch die Dicke der Unterlegscheibe begrenzt. Die Scheibendicke muss noch die Biegung der Haltekrallen oder des Ringsteges um den Flansch herum zulassen.

Eine andere Möglichkeit ist das Anformen eines Haltekragens am inneren Rand der Auflagefläche des Befestigungsmittels, der nach außen gebördelt wird und so einen Absatz in der Scheibe hält. Diese Ausgestaltung ist bspw. in der DE 101 36 829 C1 beschrieben. Dabei verbleibt bei einer Sechskantmutter aber nur eine minimale, radial nach außen versetzte, d.h. asymmetrische, Auflagefläche zwischen Mutternkörper und Unterlegscheibe. Dies führt dazu, dass die Kraftübertragung zwischen Unterlegscheibe und Mutternkörper ungünstig. Außerdem besteht die Gefahr, dass sich der Bördelrand des Haltekragen am Absatz der Unterlegscheibe verklemmt. Bei einer Flanschmutter ist der Haltekragen nur mit einem großen Werkzeugaufwand herstellbar.

Die britische Patentschrift GB 01315 (D1) zeigt eine Mütter mit einer Unterlegscheibe. Die Mutter ist entweder außen oder innen im Bereich des Gewindes mit einem Hinterschnitt versehen. An der Unterlegscheibe sind außen oder im Bereich der Durchgangsbohrung Krallen oder Lappen ausgebildet, die den jeweiligen Hinterschnitt umgreifen bzw. in den selben eingreifen. Durch diese Konstruktion ist die Unterlegscheibe lose drehbar an der Mutter gehalten.

Die U.S.-Patentschrift 3 304 562 (D2) beschreibt ein Verfahren zur Herstellung einer Mutter, die mit einer Sperrscheibe verbunden ist. Die Sperrscheibe weist radial nach außen gerichtete verschränkte Zähne sowie einen radial nach innen gerichteten Halteflansch auf. Die Mutter ist auf der Seite der Auflagefläche 16 mit einer zylinderförmigen Ausnehmung versehen.

Zum Verbinden von Mutter und Scheibe wird die Scheibe konzentrisch auf den Rand der zylindrischen Ausnehmung positioniert und dann einer so großen Druckkraft ausgesetzt, dass das Material im Bereich des Randes derart verformt wird, dass sich ein lippenartiger Vorsprung 48 bildet, der den Halteflansch 46 der Scheibe 18 hintergreift.

Die Aufgabe der vorliegenden Erfindung besteht somit darin, ein Befestigungselement, eine Unterlegscheibe und ein aus beiden gebildetes Befestigungsmittel bereit zu stellen, bei welchen die radiale Ausdehnung und die Dicke der Unterlegscheibe nicht mehr begrenzt sind.

Die Lösung besteht in einem Befestigungsmittel mit den Merkmalen des Anspruchs 1. Erfindungsgemäß ist also vorgesehen, dass die Dicke der Haltelappen geringer ist als die Dicke der Unterlegscheibe.

Ein wesentlicher Vorteil der vorliegenden Erfindung besteht darin, dass sowohl der bisher am Befestigungselement notwendige Flansch als auch der im Stand der Technik vorgeschlagene Haltekragen an der Unterlegscheibe entbehrlich sind. Damit gehen ein wesentlich geringerer Fertigungsaufwand und Materialverbrauch einher. Die Hinterschneidung im Befestigungselement ist außerdem viel leichter herstellbar als bspw. der Haltekragen an der Unterlegscheibe bzw. der Flansch an den im Stand der Technik bekannten Befestigungselementen. Die Ausgestaltung des erfindungsgemäßen Befestigungselements ist somit nicht mit einem erhöhten Werkzeugaufwand verbunden. Gleiches gilt für die erfindungsgemäß an der Unterlegscheibe vorgesehenen Haltelappen, die bspw. einstückig mit der Unterlegscheibe gestanzt und anschließend aus der Ebene der Unterlegscheibe heraus nach oben gebogen werden können.

Ferner ist die Auflagefläche zwischen Mutternkörper und Unterlegscheibe symmetrisch und breiter als im Stand der Technik, was eine günstigere Kraftübertragung ergibt. Insbesondere ist die Krafteinleitung verbessert, und die Andruckkraft ist gleichmäßiger verteilt.

Das erfindungsgemäße Befestigungselement erlaubt ferner die Herstellung beliebiger Varianten mit zusätzlichen Formelementen, bspw. das Anbringen von Sicherungselementen am der Auflagefläche abgewandten Ende des Befestigungselements.

Ferner sind die Dimensionen wie Dicke und Außendurchmesser der erfindungsgemäßen Unterlegscheibe beliebig wählbar und nicht mehr durch die Abmessungen des Befestigungselements eingeschränkt. Die Dicke der Unterlegscheibe kann deswegen beliebig variiert werden, weil die Dimensionierung der erfindungsgemäß vorgesehenen Haltelappen im Gegensatz zur Dimensionierung der im Stand der Technik bekannten Haltekrallen ebenfalls frei wählbar und von der Dicke der Unterlegscheibe unabhängig ist. Der Durchmesser der Unterlegscheibe kann ebenfalls beliebig variiert werden, weil die erfindungsgemäß vorgesehenen Haltelappen, anders als die im Stand der Technik bekannten Haltekrallen, nicht mehr am Außenumfang der Unterlegscheibe angeordnet sein müssen.

Ein weiterer Vorteil der vorliegenden Erfindung ist dadurch gegeben, dass das Befestigungselement und die Unterlegscheibe nunmehr getrennt bearbeitet werden können, insbesondere getrennt einer Oberflächenbeschichtung unterzogen werden können. Damit wird vermieden, dass das aus Befestigungselement und Unterlegscheibe resultierende Befestigungsmittel bei der Bearbeitung Beeinträchtigungen ausgesetzt ist. Insbesondere können die einzelnen Teile beim Aufbringen einer Oberflächenbeschichtung nicht mehr verkleben, und die Beschichtung wird nicht beschädigt. Ferner sind gleichmäßigere Schichtdicken möglich.

Das erfindungsgemäße Befestigungsmittel aus einem Befestigungselement und einer Unterlegscheibe zeichnet sich dadurch aus, dass die Unterlegscheibe drehbar und unverlierbar am Befestigungselement gehalten ist. Das Befestigungsmittel kann sehr einfach dadurch hergestellt werden, dass die Unterlegscheibe in das Befestigungsmittel ohne großen maschinellen Aufwand "eingeklipst" wird. Die Haltelappen an der Unterlegscheibe werden in der im Befestigungselement vorgesehenen Hinterschneidung gehalten und sind gleichzeitig in gungselement vorgesehenen Hinterschneidung gehalten und sind gleichzeitig in der umlaufenden Hinterschneidung drehbar.

Die vorliegende Erfindung zeichnet sich durch eine besonders einfache konstruktive Ausgestaltung aus, die mit geringem maschinellen Aufwand herstellbar ist und große Variationsmöglichkeiten hinsichtlich ihrer Abmessungen erlaubt.

Vorteilhafte Weiterbildungen ergeben sich aus den Unteransprüchen.

Gemäß einer bevorzugten Ausgestaltung der vorliegenden Erfindung ist die im Befestigungselement vorgesehene Hinterschneidung im Querschnitt trapezförmig ausgebildet. Diese geometrisch einfache Ausgestaltung ist mit geringem Aufwand herstellbar. In diesem Fall sind die an der Unterlegscheibe ausgebildeten Haltelappen vorzugsweise unter einem spitzen Winkel (α) radial nach außen geneigt angeordnet. Derart gestaltete Haltelappen sind ebenfalls einfach herzustellen und können, wie bei einem Druckknopf, einfach und bequem in die Hinterschneidung eingedrückt oder "eingeklipst" werden. Die Haltelappen sind in der Hinterschneidung lose gehalten und daher innerhalb der umlaufenden Hinterschneidung frei drehbar.

Die Hinterschneidung kann aber auch in einer weiteren zweckmäßigen Ausführungsform als umlaufende hinterschnittene Nut ausgebildet sein. Dann sind die an der Unterlegscheibe ausgebildeten Haltelappen vorzugsweise lotrecht angeordnet und weisen jeweils an ihrem freien Ende einen radial nach außen gerichteten Wulst auf, welcher nach dem Eindrücken der Haltelappen in die Hinterschneidung in die umlaufende Nut eingreifen. Auch in dieser Ausgestaltung sind die Haltelappen in der umlaufenden Nut frei drehbar.

Um das Eindrücken bzw. "Einklipsen" der Haltelappen in die Hinterschneidung zu erleichtern kann zwischen der Hinterschneidung und der Auflagefläche des erfindungsgemäßen Befestigungselements eine umlaufende Fase vorgesehen sein. Aus dem gleichen Grund können die Haltelappen in radialer Richtung federelastisch ausgebildet sein und ebenfalls eine Anlauffase aufweisen.

Vorzugsweise sind drei oder vier Haltelappen auf der Unterlegscheibe vorgesehen, um einen noch besseren Halt zu gewährleisten. Die Haltelappen können auf einer Kreislinie im gleichen Winkelabstand angeordnet sein. Die Dicke der Haltelappen kann unabhängig von Dicke der Unterlegscheibe gewählt werden. Insbesondere können die Haltelappen dünner als die Unterlegscheibe sein, was insbesondere eine federelastische Ausgestaltung vereinfacht.

Hinzu kommt, dass die erfindungsgemäßen Unterlegscheibe nach Art einer Tellerfeder leicht gewölbt ausgebildet sein kann. Die Wölbung ist dann zur Auflagefläche des Befestigungselements hin gerichtet. Der Vorteil besteht darin, dass die Unterlegscheibe in jeder Phase des Befestigungsvorgangs, d.h. während des Eindrehens und Festziehens des Befestigungselements auf einem Schraubenbolzen, unabhängig von der Größe der dabei einwirkenden Kräfte immer auf der Oberfläche des anliegenden und zu befestigenden Bauteils stehen bleibt. Ferner kann bei der Herstellung der Unterlegscheibe ein rechter Winkel (90°) zwischen Haltelappen und Unterlegscheibe eingestellt werden. Wenn die Unterlegscheibe nach Art einer Tellerfeder leicht gewölbt wird, bilden die Haltelappen mit der Senkrechten einen spitzen Winkel, behalten aber zur Unterlegscheibe den rechten Winkel bei. Dies führt zu einer noch verbesserten Kraftverteilung zwischen Unterlegscheibe und Mutternkörper.

Zu Beginn des Befestigungsvorgangs sind zwei verschieden große Reibradien zu unterscheiden. Der erste, kleinere Reibradius definiert sich über den Durchmesser des Auflagebereichs des Befestigungselements auf der Unterlegscheibe. Der zweite, größere Reibradius definiert sich über den Durchmesser der wirksamen Reibfläche der Unterlegscheibe auf dem Bauteil. Da das wirksame Reibmoment proportional zum Reibradius ist, ist das Reibmoment zwischen Unterlegscheibe und Bauteil größer als das Reibmoment zwischen Befestigungselement und Unterlegscheibe. Daraus folgt, dass die Unterlegscheibe bereits zu Beginn des Befestigungsvorgangs und auch in dessen weiterem Verlauf stehen bleibt und sich nicht mit dem Befestigungselement dreht. Dieser Effekt wird dadurch verstärkt, indem die Unterlegscheibe leicht nach innen gewölbt ist, so dass sie nur mit ihrem äußerem Rand auf dem Bauteil aufliegt.

Ausführungsbeispiele der vorliegenden Erfindung werden im Folgenden anhand der beigefügten Zeichnungen näher beschrieben. Es zeigen:
- Figur 1: eine teilweise geschnittene Seitenansicht eines ersten Ausführungsbeispiels eines erfindungsgemäßen Befestigungsmittels in schematischer, nicht maßstabsgerechter Darstellung;
- Figur 2: eine teilweise geschnittene Seitenansicht der Unterlegscheibe gemäß Figur 1 in schematischer, nicht maßstabsgerechter Darstellung;
- Figur 3: die Unterlegscheibe aus Figur 2 in einer Draufsicht in schematischer, nicht maßstabsgerechter Darstellung;
- Figur 4: eine teilweise geschnittene Seitenansicht eines weiteren Ausführungsbeispiels eines erfindungsgemäßen Befestigungsmittels in schematischer, nicht maßstabsgerechter Darstellung;
- Figur 5: eine teilweise geschnittene Seitenansicht der Unterlegscheibe gemäß Figur 4 in schematischer, nicht maßstabsgerechter Darstellung;
- Figur 6: die Unterlegscheibe aus Figur 5 in einer Draufsicht in schematischer, nicht maßstabsgerechter Darstellung.

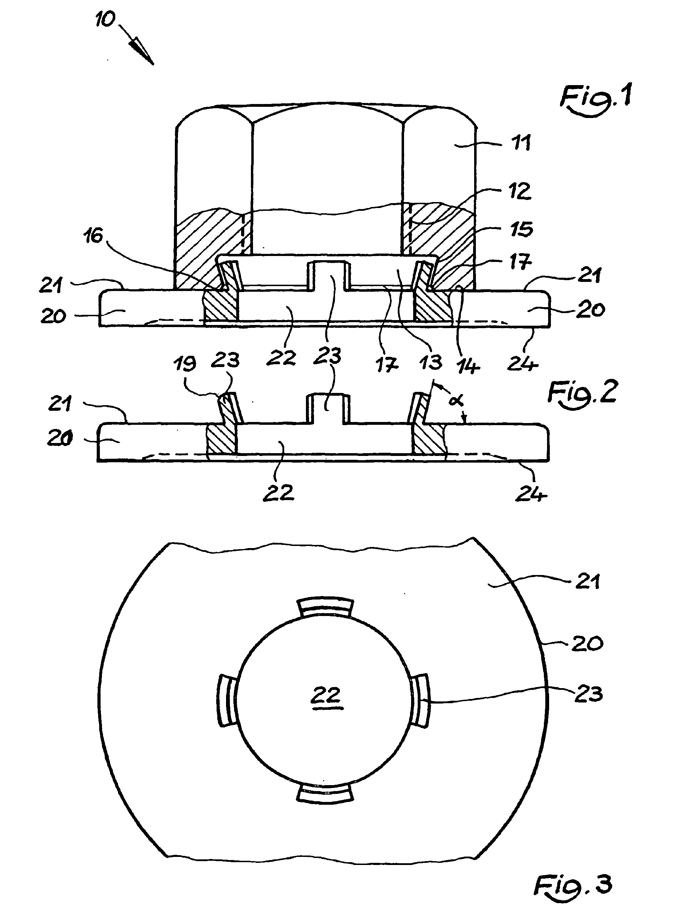

Das in der Figur 1 dargestellte Befestigungsmittel 10 besteht aus einem Befestigungselement 11, welches als Mutternkörper ausgebildet ist, und einer Unterlegscheibe 20. Das Befestigungselement 11 weist ein zentrisches Innengewinde 12 auf. Das Innengewinde 12 endet an einer Hinterschneidung 13, die im Querschnitt etwa trapezförmig ausgebildet ist. Die Hinterschneidung 13 ist durch eine Auflagefläche 14 begrenzt, die von der Stirnfläche des Befestigungselements 11 gebildet ist.

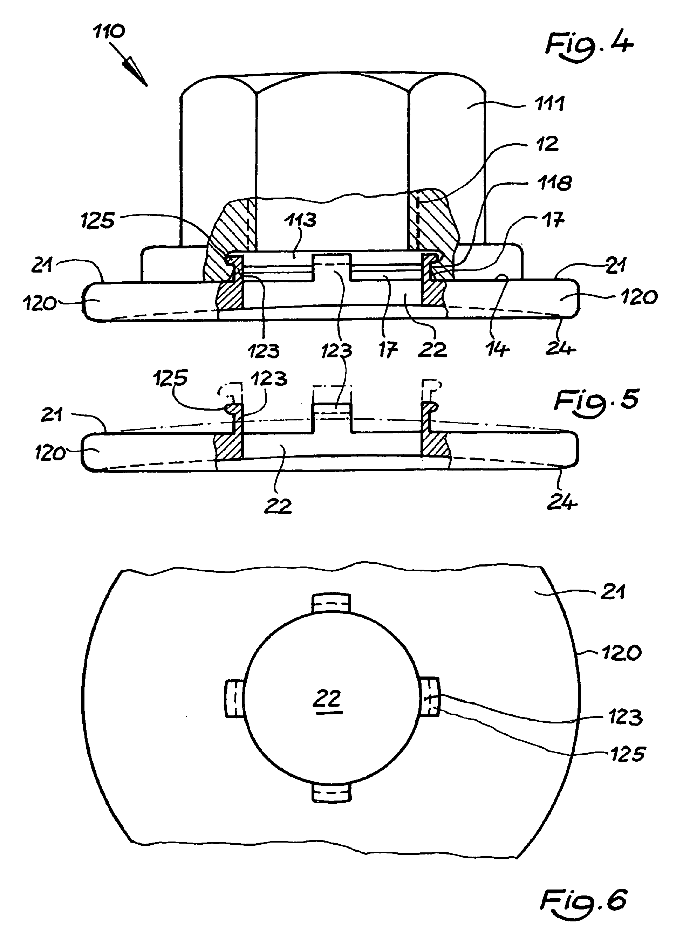

Die Auflagefläche 14 des Befestigungselements 11 steht in Kontakt mit einer Kontaktfläche 21, welche die Oberseite der Unterlegscheibe 20 bildet (vgl. auch Figuren 2 und 3). Die Unterlegscheibe 20 weist eine dem Durchmesser des Innengewindes 12 des Befestigungselements 11 angepasste Durchgangsöffnung 22 auf. Ferner sind auf der Kontaktfläche 21 der Unterlegscheibe 20 - im Ausführungsbeispiel vier - sich axial erstreckende Haltelappen 23 ausgebildet. Die Haltelappen 23 sind unter einem spitzen Winkel α radial nach außen geneigt. Der Winkel der Seitenwand 15 der Hinterschneidung 13 im Befestigungselement 11 ist dem Winkel α angepasst Die Haltelappen 23 sind im Ausführungsbeispiel dünner ausgebildet als die Dicke der Unterlegscheibe 20. Das bewirkt ein federelastisches Verhalten der Haltelappen 23 in radialer Richtung.

Die Unterlegscheibe 20 ist im Ausführungsbeispiel tellerfederartig ausgebildet, indem sie um etwa 5° gewölbt ist. Die Wölbung zeigt hierbei in Richtung der Auflagefläche 14 des Befestigungselements 11. Dadurch liegt die Unterseite 24 der Unterlegscheibe 20 zunächst nur an ihrem äußeren Rand auf dem zu befestigenden Bauteil auf.

Zum Zusammenbauen eines aus einem Befestigungselement 11 und einer Unterlegscheibe 20 bestehenden Befestigungsmittels 10 werden die Haltelappen 23 unter axialem Druck in die Hinterschneidung 13 eingedrückt oder "eingeklipst". Eine federelastische Ausgestaltung der Haltelappen 23 erleichtert hierbei das Überwinden der Kante 16 zwischen Auflagefläche 14 und Hinterschneidung 13. Eine weitere Erleichterung kann durch das Anbringen einer umlaufenden Fase 17 an der Kante 16 erreicht werden.

Die in die Hinterschneidung 13 des Befestigungselements 11 eingedrückte Unterlegscheibe 20 ist in derselben frei drehbar und unverlierbar gehalten.

Das in der Figur 4 dargestellte Befestigungsmittel 110 ist dem bereits beschriebenen Befestigungsmittel 10 ähnlich. Gleiche Merkmale werden daher im Folgenden mit gleichen Bezugszeichen belegt.

Das Befestigungsmittel 110 besteht ebenfalls aus einem Befestigungselement 111, welches als Mutternkörper ausgebildet ist, und einer Unterlegscheibe 120. Das Befestigungselement 111 weist ein zentrisches Innengewinde 12 auf. Das Innengewinde 12 endet nunmehr in einer hinterschnittenen umlaufenden Nut 113. Die Nut 113 ist durch eine senkrecht verlaufende Nase 118 begrenzt, welche in die von der Stirnfläche des Befestigungselements 111 gebildete Auflagefläche 14 mündet

Die Auflagefläche 14 des Befestigungselements 111 steht in Kontakt mit einer Kontaktfläche 21, welche die Oberseite der Unterlegscheibe 120 bildet (vgl. auch Figuren 5 und 6). Die Unterlegscheibe 120 weist eine dem Durchmesser des Innengewindes 12 des Befestigungselements 111 angepasste Durchgangsöffnung 22 auf. Ferner sind auf der Kontaktfläche 21 der Unterlegscheibe 120 - im Ausführungsbeispiel vier - sich axial erstreckende Haltelappen 123 ausgebildet. Die Haltelappen 123 stehen lotrecht auf der Kontaktfläche 21 der Unterlegscheibe 120. Die Haltelappen 123 sind im Ausführungsbeispiel ebenfalls dünner ausgebildet als die Dicke der Unterlegscheibe 120, was ebenso ein federelastisches Verhalten der Haltelappen 123 in radialer Richtung bewirkt. Am freien Ende jedes Haltelappens 123 ist ein radial nach außen gerichteter Wulst 125 ausgebildet.

Die Unterlegscheibe 120 ist auch in diesem Ausführungsbeispiel tellerfederartig ausgebildet, indem sie um etwa 2° bis 5° gewölbt ist. Die Wölbung zeigt hierbei in Richtung der Auflagefläche 14 des Befestigungselements 111. Dadurch liegt die Unterseite 24 der Unterlegscheibe 120 zunächst nur an ihrem äußeren Rand auf dem zu befestigenden Bauteil auf.

Zum Zusammenbauen eines aus einem Befestigungselement 111 und einer Unterlegscheibe 120 bestehenden Befestigungsmittels 110 werden die Wulste 125 der Haltelappen 123 unter axialem Druck in die umlaufende Nut 113 eingedrückt oder "eingeklipst". Eine federelastische Ausgestaltung der Haltelappen 123 erleichtert hierbei das Überwinden der Kante 16 zwischen Auflagefläche 14 und Nase 118. Eine weitere Erleichterung kann durch das Anbringen einer umlaufenden Fase 17 an der Kante 16 erreicht werden.

Die in die umlaufende Nut 113 des Befestigungselements 111 eingedrückte Unterlegscheibe 120 ist in derselben frei drehbar und unverlierbar gehalten.

## Patentansprüche

1. Befestigungsmittel (10) umfassend ein Befestigungselement (11, 111) und eine Unterlegscheibe (20, 120), wobei das Befestigungselement (11, 111) an einem Ende eine Auflagefläche (14) für die am Befestigungselement (11, 111) drehbar und unverlierbar gehaltene Unterlegscheibe (14) und eine umlaufende Hinterschneidung (13, 113) aufweist und wobei die Unterlegscheibe (20, 120) eine mit der Auflagefläche (14) kooperierende Kontaktfläche (21) aufweist,auf der mindestens zwei sich axial in den Bereich der Hinterschneidung (13, 113) erstreckende Haltelappen (23, 123) ausgebildet sind, **dadurch gekennzeichnet, dass** die Dicke der Haltelappen (23, 123) geringer ist als die Dicke der Unterlegscheibe (20, 120).

2. Befestigungselement nach Anspruch 1, **dadurch gekennzeichnet, dass** die Hinterschneidung (13) im Querschnitt trapezförmig ausgebildet ist.

3. Befestigungselement nach Anspruch 1, **dadurch gekennzeichnet, dass** die Hinterschneidung als umlaufende hinterschnittene Nut (113) ausgebildet ist.

4. Befestigungselement nach einem der vorhergehenden Ansprüche, **dadurch gekennzeichnet, dass** zwischen der Hinterschneidung (13; 113) und der Auflagefläche (14) eine umlaufende Fase (17) vorgesehen ist.

5. Unterlegscheibe nach Anspruch 1, **dadurch gekennzeichnet, dass** die Haltelappen (23) unter einem spitzen Winkel (α) radial nach außen geneigt angeordnet sind.

6. Unterlegscheibe nach Anspruch 1, **dadurch gekennzeichnet, dass** die Haltelappen (123) lotrecht angeordnet sind und jeweils an ihrem freien Ende einen radial nach außen gerichteten Wulst (125) aufweisen.

7. Unterlegscheibe nach einem der Ansprüche 5 und 6, **dadurch gekennzeichnet, dass** die Haltelappen (23; 123) in radialer Richtung federelastisch ausgebildet sind.

8. Unterlegscheibe nach einem der Ansprüche 5 bis 7, **dadurch gekennzeichnet, dass** drei oder vier Haltelappen (23; 123) vorgesehen sind.

9. Unterlegscheibe nach einem der Ansprüche 5 bis 8, **dadurch gekennzeichnet, dass** die der Hinterschneidung (13; 113) zugekehrten Kanten der Haltelappen (23; 123) jeweils mit einer Anlauffase (19) versehen sind.

10. Unterlegscheibe nach einem der Ansprüche 5 bis 9, **dadurch gekennzeichnet, dass** sie in einer tellerfederartigen Ausbildung leicht gewölbt ist.

## Claims

1. Fastening means (10) comprising a fastening element (11, 111) and a washer (20, 120), the fastening element (11, 111) at one end having a bearing surface (14) for the washer (20, 120), which is held on the fastening element (11, 111) in a rotatable and captive manner, and an encircling undercut (13, 113), and the washer (20, 120) having a contact surface (21), which cooperates with the bearing surface (14) and on which are formed at least two retaining tabs (23, 123) which extend axially into the region of the undercut (13, 113), **characterized in that** the thickness of the retaining tabs (23, 123) is less than the thickness of the washer (20, 120).

2. Fastening element according to Claim 1, **characterized in that** the undercut (13) is designed to be trapezoidal in cross section.

3. Fastening element according to Claim 1, **characterized in that** the undercut is designed as an encircling undercut groove (113).

4. Fastening element according to one of the preceding claims, **characterized in that** an encircling bevel (17) is provided between the undercut (13; 113) and the bearing surface (14).

5. Washer according to Claim 1, **characterized in that** the retaining tabs (23) are arranged so as to be inclined radially outward at an acute angle (α).

6. Washer according to Claim 1, **characterized in that** the retaining tabs (123) are arranged perpendicularly and have at their free end a respective bead (125) directed radially outward.

7. Washer according to one of Claims 5 and 6, **characterized in that** the retaining tabs (23; 123) are designed to be elastic in the radial direction.

8. Washer according to one of Claims 5 to 7, **characterized in that** three or four retaining tabs (23; 123) are provided.

9. Washer according to one of Claims 5 to 8, **characterized in that** those edges of the retaining tabs (23; 123) which face the undercut (13; 113) are each provided with a run-on bevel (19).

10. Washer according to one of Claims 5 to 9, **characterized in that** it is slightly arched in disc-spring-like design.

## Revendications

1. Moyen d'attache (10) comprenant un élément d'attache (11, 111) et une rondelle (20, 120), dans lequel l'élément d'attache (11, 111) présente à une extrémité une face d'appui (14) pour la rondelle (20, 120) maintenue de façon imperdable et rotative sur l'élément d'attache (11, 111) et une contre-dépouille périphérique (13, 113) et dans lequel la rondelle (20, 120) présente une face de contact (21) coopérant avec la face d'appui (14), sur laquelle sont formées au moins deux pattes de retenue (23, 123) s'étendant axialement dans la région de la contre-dépouille (13, 113), **caractérisé en ce que** l'épaisseur des pattes de retenue (23, 123) est inférieure à l'épaisseur de la rondelle (20, 120).

2. Elément d'attache selon la revendication 1, **caractérisé en ce que** la contre-dépouille (13) est réalisée en forme de trapèze en section transversale.

3. Elément d'attache selon la revendication 1, **caractérisé en ce que** la contre-dépouille est réalisée sous la forme d'une rainure périphérique en contre-dépouille (113).

4. Elément d'attache selon l'une quelconque des revendications précédentes, **caractérisé en ce qu'**il est prévu un chanfrein périphérique (17) entre la contre-dépouille (13; 113) et la face d'appui (14).

5. Rondelle selon la revendication 1, **caractérisée en ce que** les pattes de retenue (23) sont inclinées radialement vers l'extérieur sous un angle aigu (α).

6. Rondelle selon la revendication 1, **caractérisée en ce que** les pattes de retenue (123) sont disposées perpendiculairement et présentent chaque fois à leur extrémité libre un bourrelet (125) orienté radialement vers l'extérieur.

7. Rondelle selon l'une quelconque des revendications 5 et 6, **caractérisée en ce que** les pattes de retenue (23; 123) présentent une élasticité en direction radiale.

8. Rondelle selon l'une quelconque des revendications 5 à 7, **caractérisée en ce qu'**il est prévu trois ou quatre pattes de retenue (23; 123).

9. Rondelle selon l'une quelconque des revendications 5 à 8, **caractérisée en ce que** les arêtes des pattes de retenue (23; 123) tournées vers la contre-dépouille (13; 113) sont chaque fois pourvues d'un chanfrein d'engagement (19).

10. Rondelle selon l'une quelconque des revendications 5 à 9, **caractérisée en ce qu'**elle est légèrement bombée à la manière d'une rondelle élastique.
